# FASCICULE DE BREVET EUROPEEN

(11) **EP 1 171 854 B1**
(45) Date de publication et mention de la délivrance du brevet: **04.02.2004**
(21) Numéro de dépôt: 00918975.4
(22) Date de dépôt: 19.04.2000
(51) Int. Cl.: G07F 19/00, G07F 17/16, G06F 1/00

(54) **SYSTEME DE PAIEMENT POUR L'UTILISATION DE LOGICIELS**
ZAHLUNGSSYSTEM FÜR SOFTWAREGEBRAUCH
PAYMENT SYSTEM FOR SOFTWARE USE

(30) Priorité: 20.04.1999 FR 9904963
(43) Date de publication de la demande: 16.01.2002
(73) Titulaire: FRANCE TELECOM, 75015 Paris (FR)
(72) Inventeur: PAILLES, Jean-Claude, F-14610 Epron (FR); MICHON, Philippe, F-14000 Caen (FR); PETIT, Stéphane, App. 146, Bât Les Iris, 14470 Courseules/Mer (FR)
(74) Mandataire: Poulin, Gérard
(86) Numéro de dépôt international: PCT/FR2000/001023
(87) Numéro de publication internationale: WO 2000/063859

(56) Documents cités:
- EP-A- 0 809 221
- WO-A-95/34857
- US-A- 4 881 264
- US-A- 5 769 269
- PATENT ABSTRACTS OF JAPAN vol. 1999, no. 02, 26 février 1999 (1999-02-26) & JP 10 312277 A (NAKAMICHI CORP), 24 novembre 1998 (1998-11-24)

## Description

### Domaine technique

La présente invention a pour objet un système de paiement pour l'utilisation de logiciels. Ces logiciels peuvent être de nature quelconque et par exemple être des logiciels enregistrés sur un support comme les CD-ROM (Compact Disc-Read Only Memory) ou les DVD-ROM (Digital Versatile Disc-Read Only Memory) ou les logiciels téléchargés.

Ils peuvent concerner aussi bien des calculs scientifiques que des jeux, des techniques assistées par ordinateur, du traitement de texte, etc..

### Etat de la technique antérieure

Le mode actuel de diffusion des logiciels est principalement le CD-ROM, et sera très bientôt le DVD-ROM. Pour les éditeurs de logiciel se pose de façon de plus en plus aiguë le problème de la copie frauduleuse de ces logiciels. Si, pendant un temps, le format du CD-ROM a empêché la recopie sur un support vierge, actuellement, les disques inscriptibles et les graveurs de CD sont devenus accessibles au niveau du grand public. Le même phénomène ne tardera sans doute pas à advenir dans le cas de la technologie DVD.

Un autre mode possible de diffusion des logiciels, quoique moins usité pour des raisons de performances, est le téléchargement. Il n'est pas approprié aux jeux ayant besoin de très nombreuses images, ou scènes en trois dimensions. En revanche, il peut se justifier dans d'autres cas. De nombreux logiciels (compilateurs, éditeurs...) entrent dans cette catégorie. Ces logiciels sont en général gratuits, car, du fait de leur volume faible qui les rend téléchargeables, ils seraient très faciles à copier d'un ordinateur à un autre.

Par ailleurs, il est clair que le prix d'achat élevé d'un logiciel est souvent dissuasif pour les utilisateurs. Le coût du support CD-ROM et de sa gravure intervient pour très peu dans ce prix. Le prix d'achat élevé des CD/DVD-ROM actuels correspond avant tout à la rémunération de l'éditeur et des distributeurs des jeux.

Ces observations donnent à penser qu'il existe un besoin pour le paiement à l'acte, ou à la durée ou à la séance de logiciels sur support CD/DVD-ROM, ou des logiciels téléchargés. Ainsi, les éditeurs se rémunéreront sur une base de clients beaucoup plus importante, en fonction de l'utilisation que le client fait de ce logiciel. Globalement, un tel procédé devrait plutôt développer le chiffre d'affaires de la profession. De plus, la copie de support ne présentera plus d'intérêt, puisque de toute façon, il sera nécessaire de payer pour l'utilisation de ce logiciel.

Or, il n'y a pas, à l'heure actuelle de moyens fiables et sûrs pour assurer un paiement pour l'utilisation de logiciels. La présente invention a justement pour but de remédier à cette carence.

Le document FR-A-2 750 275 décrit un procédé et un système de gestion dans un système télématique distribué. Ce procédé met en oeuvre des opérations de réception d'une demande de prestation, envoi d'une demande d'informations à un serveur, réception de ces informations, envoi d'une requête à un terminal de consultation, réception de la transaction, soumission de cette transaction à un système acquéreur, réception d'un acquittement et envoi de cet acquittement au terminal de consultation.

Le document WO 98/14921 décrit un système électronique de transactions commerciales et de paiement dans lequel la transaction met en jeu un client, un marchand et un agent. Une transaction nécessite toujours un double échange entre le client et le marchand et un double échange entre le client et l'agent. La présente invention évite de tels échanges complexes.

### Exposé de l'invention

Un système de paiement pour l'utilisation de logiciel doit pouvoir remplir au moins trois fonctions :
- contrôler l'utilisation du logiciel, chaque fois que le logiciel est lancé, ou bien périodiquement, ou bien lorsqu'un événement particulier se produit dans le logiciel (par exemple un changement de "monde" dans un jeu, un passage au deuxième acte d'une pièce de théâtre ou de film...) ; alors, le logiciel doit demander qu'un paiement soit effectué ;
- enregistrer les utilisations, pour faire payer l'utilisateur : si l'utilisateur accepte la demande de paiement, il faut enregistrer cette demande d'une façon sécurisée, pour pouvoir le faire payer ultérieurement ; la sécurisation doit interdire à l'utilisateur d'effacer ses dettes, et le paiement différé doit permettre d'agréger des petits montants, pour pouvoir présenter à l'utilisateur une note globale, périodiquement (une fois par mois, par exemple), pour des raisons pratiques mais aussi du fait des coûts de recouvrement de ces petits montants ;
- reverser périodiquement à l'éditeur du logiciel le montant dû.

Ces fonctions doivent être remplies compte tenu de certaines contraintes :
- les CD-ROM peuvent être étrangers : un système de paiement de logiciel doit donc comporter une dimension trans-frontière, donc des mécanismes susceptibles d'être déployés internationalement, et une reconnaissance internationale dans des comités de standardisation ;
- l'interface entre logiciel et les moyens de paiement doit être standardisée de façon à ce qu'un développeur de logiciel n'ait pas à programmer lui-même la logique de paiement correspondant à l'emploi de ce logiciel ;
- le système qui enregistre les utilisations doit être capable de déclencher des paiements internationaux pour rémunérer les éditeurs de logiciels dans n'importe quel pays du monde ;
- l'agrégation pour les paiements des utilisateurs et les reversements aux éditeurs de logiciels doit être possible : comme indiqué plus haut, ceci correspond à un objectif de simplicité, mais aussi à un souci de réduction des coûts bancaires ; notamment, dans le cas de transactions vers l'étranger, il serait inefficace (voire néfaste), sur le plan des coûts, de faire trop d'opérations de virements de petits montants.

La présente invention répond à toutes ces exigences en tenant compte de toutes ces contraintes. A cette fin, le système de l'invention comprend un module de paiement et des moyens de traitement de messages et de paiement. Par ailleurs, le logiciel dont on veut contrôler l'utilisation comprend une interface logicielle comprise dans le système de l'invention. Les fonctions de ces moyens sont les suivantes :
- l'interface logicielle est apte à constituer un premier message qui est un message d'offre d'utilisation du logiciel, ce premier message contenant, au moins, l'identité de l'éditeur du logiciel, les paramètres de l'offre, la signature numérique par l'éditeur d'au moins une partie de l'offre, ce premier message étant adressé au module de paiement ;
- le module de paiement est apte à recevoir ce premier message, à l'afficher, à recevoir en retour l'acceptation éventuelle de l'utilisateur du logiciel, et, en cas d'acceptation, à constituer un deuxième message de demande de paiement contenant au moins l'identité de l'utilisateur et celle de l'éditeur, ainsi qu'une preuve que l'utilisateur accepte l'offre, ce module étant apte à adresser ce deuxième message aux moyens de traitement ;
- les moyens de traitement de messages et de paiement sont aptes à recevoir le deuxième message, à contrôler la preuve qu'il contient, à enregistrer la demande de paiement avec au moins l'identité de l'utilisateur et l'identité de l'éditeur du logiciel, le montant à payer, et à créditer l'éditeur dudit montant, ces moyens étant aptes en outre à constituer un troisième message, qui est un message d'acquittement, ce troisième message comprenant, au moins, l'identité des moyens de traitement et une signature numérique de l'offre, ce troisième message étant adressé au module de paiement ;
- le module de paiement est en outre apte à retransmettre ce troisième message à l'interface logicielle ;
- l'interface logicielle est en outre apte à vérifier la signature des moyens de traitement par rapport aux paramètres de l'offre contenue dans le premier message et, en cas de concordance, à autoriser l'utilisation du logiciel.

Dans une première variante, les moyens de traitement de messages et de paiement sont constitués par un serveur de paiement distant relié au module de paiement par un réseau de télécommunications, ce serveur recevant et traitant le deuxième message, constituant et émettant le troisième message. Ce serveur de paiement agrège les crédits élémentaires pour, périodiquement, reverser aux éditeurs le montant qui leur est dû.

Dans une seconde variante les moyens de traitement de messages et de paiement comprennent des moyens sécurisés contenant au moins l'identité de l'utilisateur, ces moyens étant de plus aptes à recevoir le deuxième message, à contrôler la preuve qu'il contient, à enregistrer la demande de paiement et à constituer le troisième message d'acquittement, et comprennent en outre un serveur de paiement distant apte à créditer l'éditeur.

Dans cette variante, les moyens sécurisés peuvent comprendre un lecteur de carte à puce avec une carte à puce contenant l'identité de l'utilisateur, la carte étant apte à recevoir le deuxième message, à contrôler la preuve qu'il contient, à enregistrer la demande de paiement et à constituer le troisième message d'acquittement.

Régulièrement, l'ensemble des demandes enregistrées dans la carte, qui correspondent à des usages de logiciels, sont rapatriées dans le serveur grâce à un réseau de télécommunications.

La carte peut être du type pré-payée (sous forme par exemple de porte monnaie électronique) ou post-payée.

Pour une carte pré-payée comme pour une carte post-payée, la carte est apte à constituer un fichier des demandes acquittées et des montants correspondants, le message d'acquittement n'étant émis avec sa signature qu'une fois la mise à jour de ce fichier effectuée.

La présente invention a également pour objet, un module de paiement pour système de paiement pour l'utilisation de logiciel, caractérisé en ce qu'il comprend :
- des moyens pour traiter un premier message contenant, au moins, l'identité d'un éditeur de logiciel, des paramètres d'une offre d'utilisation, une signature numérique d'au moins une partie de cette offre,
- des moyens pour émettre ce message vers un utilisateur,
- des moyens pour recevoir une acceptation dudit utilisateur du logiciel,
- des moyens pour constituer un deuxième message de demande de paiement contenant au moins l'identité de l'utilisateur et celle de l'éditeur ainsi qu'une preuve que l'utilisateur accepte l'offre,
- des moyens pour recevoir et traiter un troisième message comprenant une signature numérique constituant une preuve de paiement.

La présente invention a encore pour objet des moyens de traitement de messages et de paiement pour système de paiement pour l'utilisation de logiciel, caractérisés en ce qu'ils comprennent :
- des moyens aptes à recevoir d'un module de paiement un message de demande de paiement contenant au moins l'identité d'un utilisateur et celle d'un éditeur ainsi qu'une preuve que l'utilisateur accepte l'offre d'utilisation d'un logiciel qui lui a été faite,
- des moyens aptes à contrôler cette preuve,
- des moyens aptes à enregistrer la demande de paiement avec au moins l'identité de l'utilisateur et l'identité de l'éditeur du logiciel, le montant à payer et des moyens aptes à créditer l'éditeur dudit montant,
- des moyens aptes en outre à constituer un message d'acquittement, ce message comprenant, au moins, l'identité des moyens de traitement, et une signature numérique qui constitue la preuve du paiement,
- des moyens pour adresser ce message à un module de paiement.

### Brève description des figures

- la figure 1 illustre un système conforme à l'invention dans sa première variante ;
- la figure 2 illustre un arbre de certification avec une chaîne de certificats ;
- la figure 3 illustre un système conforme à l'invention dans sa seconde variante.

### Description détaillée de modes particuliers de réalisation

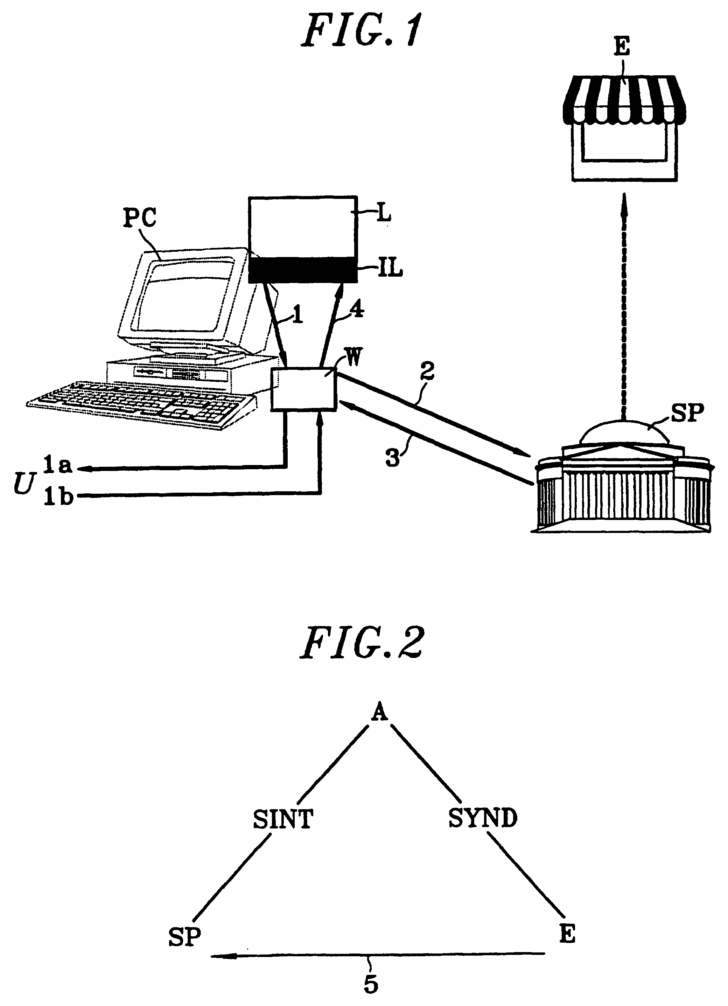

On voit, sur la figure 1, un ordinateur personnel PC supposé contenir un logiciel L, dont on veut contrôler l'utilisation. Ce logiciel est associé à une interface logicielle IL, appelée par la suite "MARCHAND", qui communique avec le système de paiement proprement dit. On trouve également un module de paiement W, appelé par la suite "WALLET". A distance se trouve un serveur de paiement SP, relié au module WALLET par une ligne de transmission (non représentée). L'éditeur du logiciel est référencé E.

Dans la variante illustrée sur la figure 1, lorsque le logiciel L a décidé de demander un nouveau paiement, un message d'offre référencé 1 est émis par l'interface MARCHAND à destination du module WALLET. Ce message d'offre peut contenir :
- l'identité de l'éditeur ;
- la description de l'offre, texte compréhensible par l'utilisateur explicitant ce qu'il va obtenir moyennant paiement (par exemple : "30 minutes supplémentaires d'utilisation" ou bien "scène 3 : durée 25 minutes") ;
- le prix (montant, unité monétaire, etc.)
- l'heure et la date interne du PC ;
- un aléa interne ;
- une signature par l'éditeur du logiciel de cette offre, sous la forme S_{E} (offreₕ, prix) où offreₕ signifie "condensé des données de l'offre".

Le module WALLET recevant ce message va demander à l'utilisateur U s'il est d'accord pour accepter cette offre. Par exemple, une fenêtre est affichée à l'écran, visualisant la description de l'offre, l'heure et la date, le montant et l'unité monétaire à payer, et ce même prix converti en Francs français. Cet affichage est symbolisé par la flèche la sur la figure 1.

Si l'utilisateur U est d'accord, il clique par exemple sur une case " accord " (réponse symbolisée par la flèche 1b sur la figure 1). Le module WALLET émet alors le message 2 "demande de paiement" à destination du serveur SP. Ce message peut contenir :
- un condensé de l'offreₕ, le prix, la date et l'heure, l'aléa, la signature S_{E}(offreₕ, prix) ;
- l'identité de l'utilisateur U, et celle de l'éditeur E ;
- une preuve que le client est d'accord pour acheter cette offre. La nature de la preuve peut dépendre du mode de réalisation : ce peut être un mot de passe envoyé au serveur de paiement SP, ou un code confidentiel donné à une carte à puce, qui elle-même fournit au serveur SP une preuve cryptographique : signature, etc..

Le fait de transmettre un condensé de l'offre ("offreₕ") et non l'offre complète permet au client de ne pas révéler au serveur SP ce qu'il sélectionne, sans empêcher les contrôles par le serveur SP.

Le serveur de paiement SP recevant cette demande de paiement 2 effectue alors les opérations suivantes :
- contrôle de la preuve donnée par le client,
- conversion en Francs français, si nécessaire,
- contrôle de la consommation de l'utilisateur ; à titre d'exemple, le serveur SP vérifie que le cumul de ce qui a été consommé depuis le début de la période est inférieur au montant d'autorisation attribué à cet utilisateur (cas du post-paiement), ou bien que ce cumul est inférieur à la provision constituée par l'utilisateur à cet usage (cas du pré-paiement),
- enregistrement de la demande de paiement, pour pouvoir réaliser ultérieurement les opérations de paiement ; cet enregistrement comporte au moins :
   - l'identification de l'utilisateur,
   - l'identification de l'éditeur du logiciel,
   - le prix,
   - l'heure et date, le condensé offreₕ .....,
- constitution du message 3 d'acquittement, qui va prouver au logiciel et à son interface "MARCHAND" que le paiement a bien été réalisé ; ce message d'acquittement, pour établir une preuve vérifiable, contiendra :
   - l'identité du serveur SP,
   - la signature S_{SP} (offreₕ, prix, aléa, date-heure) par le serveur de paiement,

Le module WALLET transmet simplement le message reçu à l'interface MARCHAND.

L'interface MARCHAND vérifie la signature S_{SP}(offreₕ, prix, aléa, date-heure) du message d'acquittement, par rapport aux paramètres de l'offre précédemment envoyée. S'il y a concordance, alors l'exécution du logiciel L peut continuer.

Périodiquement, tous les mois par exemple, le serveur SP calcule le cumul des dépenses engagées par chaque utilisateur, et il provoque, dans le cas d'un post-paiement, le paiement effectif des sommes dues au moyen d'une carte pour lequel la connaissance préalable du numéro de carte du client est nécessaire, ou par prélèvement automatique sur le compte du client.

Pour le pré-paiement, ceci se fait par le rechargement volontaire par l'utilisateur de sa provision chez un intermédiaire.

De même, le cumul par l'éditeur permet de calculer le montant dû à chaque éditeur.

Les traits pointillés du dessin de la figure 1 correspondent à ce flux financier du serveur SP vers l'éditeur.

Pour l'établissement des différentes signatures mentionnées ci-dessus, on peut utiliser un système à clé publique avec arbre de certification. Cette solution est en effet l'une des rares qui permettent de concevoir des systèmes simples, sûrs, ouverts et internationalement reconnus.

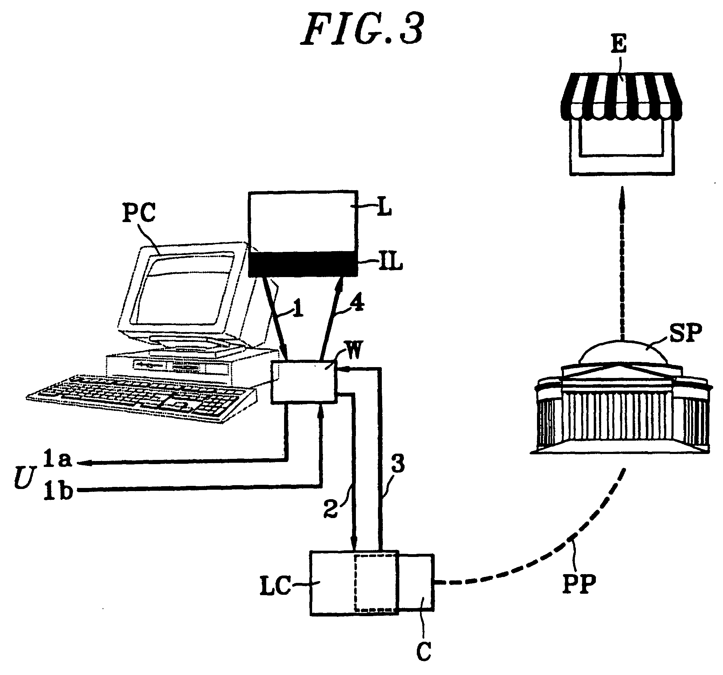

Les principes de cette technique sont bien connus. La mise en oeuvre est schématisée sur la figure 2. Une autorité A définit la "racine" de l'arbre de certification, dans lequel se trouvent les différents acteurs du système :
- les éditeurs de logiciels utilisant ce moyen de paiement,
- les serveurs SP,
- les entités intermédiaires ; dans l'exemple de la figure 2, il pourrait s'agir d'un syndicat d'éditeurs de logiciels d'un pays (SYND), et d'une autorité nationale de régulation des serveurs INTERNET (SINT).

Ainsi, lorsqu'un logiciel de tel éditeur de logiciel est utilisé par un utilisateur correspondant à tel serveur SP, un ou des certificats joints aux messages 1 et 3 permettent de vérifier les signatures.

Pour le message d'offre (message 1) l'éditeur E peut adresser au serveur SP un message contenant le condensé offreₕ, le prix, la date et l'heure, l'aléa, la signature S_{E}(offreₕ, prix), le certificat de E par SYND, le certificat de SYND par A.

Le serveur SP, qui connaît la clé publique de A, vérifie le certificat de SYND par A, avec la clé publique de A. Il obtient donc la clé publique de SYND, de façon sûre et vérifie le certificat de E par SYND avec la clé publique de SYND. Il obtient alors la clé publique de E, de façon sûre, et peut finalement contrôler la signature S_{E}.

La variante qui vient d'être décrite peut être qualifiée de "en ligne" ("on line") car l'utilisateur doit se connecter, par exemple par le réseau INTERNET, au serveur SP à chaque demande de paiement. Cette version n'est acceptable que pour des paiements peu fréquents (par exemple pour pouvoir recevoir un film sur DVD-ROM qui dure 2 heures).

L'invention prévoit une autre variante, qui est mieux appropriée aux paiements répétés. Cette variante est décrite sur la figure 3. Elle suppose l'existence d'un lecteur de carte LC et d'une carte C. Comme la carte constitue un support sûr, elle remplace le serveur SP en ce qui concerne les messages 2 et 3, lesquels circulent alors entre le module W et le lecteur de carte LC. Cette variante peut être qualifiée de "off line" (hors connexion) par opposition à la première. Le paiement de l'éditeur E s'effectue toujours par le serveur de paiement SP, lequel reçoit périodiquement les informations mémorisées dans la carte (ligne PP).

S'agissant de la carte C, on peut distinguer deux cas :
- la carte est une carte pré-payée (du type carte porte-monnaie électronique, par exemple) ; la provision financière diminue à chaque fois qu'un message de demande de paiement est traité ; alors, il n'y a pas de risque d'impayés, car la carte avant de se vider, a du être chargée ; il faut cependant relever les utilisations qui ont été faites, pour pouvoir payer les éditeurs, selon l'utilisation de leurs logiciels ; ceci peut par exemple être fait au moment du rechargement de la carte ;
- la carte est une carte post-payée : le risque existe que les utilisations enregistrées dans la carte ne reviennent jamais à l'intermédiaire, donc que le client ne soit jamais débité, et par voie de conséquence que les éditeurs des logiciels utilisés ne soient pas crédités. La parade à ce problème consiste à limiter les paiements à un certain plafond et/ou à faire payer une caution supérieure à ce plafond, qui dissuade l'utilisateur de faire disparaître sa carte.

Du point de vue des mécanismes précis, cette seconde variante reste très proche de la première, si ce n'est le remplacement du serveur SP par la carte C. Cette carte devra donc contenir un fichier des utilisations qui, comme dans le cas du serveur SP, contiendra les enregistrements des transactions, eux mêmes contenant au minimum les informations suivantes :
- l'identification de l'utilisateur,
- l'identification de l'éditeur du logiciel,
- le prix.

Si l'on accepte de sacrifier un peu de sécurité pour ne pas avoir le surcoût du lecteur de carte, la carte pourra être remplacée par un moyen de mémorisation intégré au PC.

Pour que le fichier des demandes de paiement ne soit pas trop facilement altérable ou effaçable, il faut utiliser des techniques de fragmentation/dissémination sur la totalité du disque, dont la complexité constituera une barrière, certes moins forte que la sécurité physique des cartes à puce, mais suffisante dans bien des cas.

## Revendications

1. Système de paiement pour l'utilisation d'un logiciel (L) contenu sur un support, ce logiciel contenant une interface (IL), le système comprenant ladite interface logicielle et comprenant en outre un module de paiement (W) et des moyens de traitement de messages et de paiement (SP), les fonctions de ces moyens étant les suivantes :
l'interface logicielle (IL) est apte à constituer un premier message (1) qui est un message d'offre d'utilisation du logiciel, ce premier message (1) contenant, au moins, l'identité de l'éditeur du logiciel (E), des paramètres de l'offre, la signature numérique par l'éditeur d'au moins une partie de l'offre, ce premier message étant adressé au module de paiement (W) ;
le module de paiement (W) est apte à recevoir ce premier message (1), à l'afficher (1a), à recevoir en retour l'acceptation éventuelle (1b) de l'utilisateur (U) du logiciel, et en cas d'acceptation, à constituer un deuxième message (2) de demande de paiement contenant au moins l'identité de l'utilisateur (U) et celle de l'éditeur (E) ainsi qu'une preuve que l'utilisateur (U) accepte l'offre, ce module (W) étant apte à adresser ce deuxième message (2) aux moyens de traitement de messages et de paiement (SP) ;
les moyens de traitement de messages et de paiement (SP) sont aptes à recevoir le deuxième message (2), à contrôler la preuve qu'il contient à enregistrer la demande de paiement avec au moins l'identité de l'utilisateur (U) et l'identité de l'éditeur du logiciel (E), le montant à payer et à créditer l'éditeur (E) dudit montant, ces moyens étant aptes en outre à constituer un troisième message (3), qui est un message d'acquittement, ce troisième message (3) comprenant, au moins, l'identité des moyens de traitement et une signature numérique qui constitue la preuve du paiement, ce troisième message étant adressé au module de paiement (W) ;
le module de paiement (W) est en outre apte à retransmettre ce troisième message (3) à l'interface logicielle (IL) ;
l'interface logicielle (IL) est en outre apte à vérifier la signature des moyens de traitement (SP) par rapport aux paramètres de l'offre contenue dans le premier message et, en cas de concordance, à autoriser l'utilisation du logiciel (L).

2. Système selon la revendication 1, dans lequel la signature numérique par l'éditeur d'au moins une partie de l'offre et la signature numérique constituant la preuve du paiement, sont des signatures à clé publique avec un arbre de certification, une autorité (A) définissant une racine de l'arbre de certification dans lequel se trouvent les différents acteurs du système, notamment les éditeurs de logiciels (E) et les serveurs de paiement (SP), un ou des certificats étant joint(s) au prmier et au troisième messages (1) (3) pour la vérification des signatures.

3. Système selon la revendication 1, dans lequel les moyens de traitement de messages et de paiement ont constitués par un serveur de paiement distant (SP) relié au module de paiement (W) par un réseau de télécommunications, ce serveur (SP) recevant et traitant le deuxième message (2) et constituant et émettant le troisième message (3), ce serveur de paiement calculant le cumul des dépenses engagées par chaque utilisateur pour tous les éditeurs pour faire payer cet utilisateur, et provoquant le reversement des sommes dues à chaque éditeur par tous les utilisateurs.

4. Système selon la revendication 1, dans lequel les moyens de traitement de messages et de paiement comprennent des moyens sécurisés (LC, C) contenant au moins l'identité de l'utilisateur (U), ces moyens étant aptes à recevoir le deuxième message (2), à contrôler la preuve qu'il contient, à enregistrer la demande de paiement et à constituer le troisième message d'acquittement (3) avec la preuve de paiement, et comprennent en outre un serveur de paiement distant (SP) apte à créditer l'éditeur (E).

5. Système selon la revendication 4, dans lequel les moyens sécurisés comprennent un lecteur de carte (LC) avec une carte (C) contenant l'identité de l'utilisateur, le lecteur de carte et la carte étant aptes à recevoir le deuxième message (2), à contrôler la preuve qu'il contient, à enregistrer la demande de paiement et à constituer le troisième message d'acquittement (3) avec la preuve de paiement.

6. Système selon la revendication 5, dans lequel la carte (C) est du type pré-payée et contient une provision, la carte étant apte à débiter cette provision à chaque demande de paiement du montant de la demande.

7. Système selon la revendication 6, dans lequel la carte pré-payée (C) formant le message d'acquittement est apte à inséter, dans ce message, une preuve que le montant de la demande dû a été débité dans la carte.

8. Système selon la revendication 6, dans lequel la carte pré-payée (C) est apte à constituer un fichier des demandes acquittées et des montants correspondants, le message d'acquittement n'étant émis avec sa signature qu'une fois la mise à jour de ce fichier effectuée.

9. Système selon la revendication 8, dans lequel la carte pré-payée (C) peut être rechargée, le fichier qu'elle contient étant transféré préalablement au serveur de paiement (SP) lors du rechargement pour reversement aux éditeurs.

10. Système selon la revendication 6, dans lequel la carte pré-payée (C) est du type porte-monnaie électronique.

11. Système selon la revendication 4, dans lequel la carte (C) est du type post-payée.

12. Système selon la revendication 5, dans lequel la carte (C) est du type post-payée.

13. Système selon la revendication 12, dans lequel la carte post-payée (C) est apte à constituer un fichier des demandes acquittées et des montants correspondants, le message d'acquittement n'étant émis avec sa signature qu'une fois la mise à jour de ce fichier effectué.

14. Système selon la revendication 13, dans lequel le fichier de la carte est transféré au serveur de paiement (SP) pour reversement aux éditeurs.

15. Module de paiement (W) pour système de paiement pour l'utilisation de logiciel, **caractérisé en ce qu'**il comprend :
• des moyens pour traiter un premier message (1) contenant, au moins l'identité d'un éditeur de logiciel (E), des paramètres d'une offre d'utilisation, une signature numérique d'au moins une partie de cette offre,
• des moyens pour émettre ce message (1a) vers un utilisateur (U),
• des moyens pour recevoir une acceptation (1b) dudit utilisateur (U) du logiciel,
• des moyens pour constituer un deuxième message (2) de demande de paiement contenant au moins l'identité de l'utilisateur (U) et celle de l'éditeur (E) ainsi qu'une preuve que l'utilisateur (U) accepte l'offre,
• des moyens pour recevoir et retransmettre un troisième message (3) comprenant une signature numérique constituant une preuve de paiement.

16. Moyens de traitement de messages et de paiement (SP) pour système de paiement pour l'utilisation de logiciel, **caractérisés en ce qu'**il comprend :
• des moyens aptes à recevoir d'un module de paiement (W) un message de demande de paiement contenant au moins l'identité d'un utilisateur (U) et celle d'un éditeur (E) ainsi qu'une preuve que l'utilisateur (U) accepte l'offre d'utilisation d'un logiciel qui lui a été faite,
• des moyens aptes à contrôler cette preuve,
• des moyens aptes à enregistrer la demande de paiement avec au moins l'identité de l'utilisateur et l'identité de l'éditeur (E) du logiciel, le montant à payer et des moyens aptes à créditer l'éditeur (E) dudit montant,
• des moyens aptes en outre à constituer un message (3) d'acquittement, ce message (3) comprenant au moins l'identité des moyens de traitement, et une signature numérique qui constitue la preuve du paiement,
• des moyens pour adresser ce message (3) à un module de paiement (W).

17. Moyens de traitement de messages et de paiement (SP) pour système de paiement pour l'utilisation de logiciel, selon la revendication 15, **caractérisés en ce qu'**ils comprennent des moyens sécurisés comprenant un lecteur de carte (LC) avec une carte (C) contenant l'identité d'un utilisateur de logiciel, le lecteur de carte et la carte étant aptes à recevoir un message contenant une preuve que l'utilisateur a accepté une offre et à contrôler cette preuve, à enregistrer une demande de paiement et à constituer un message d'acquittement (3) avec la preuve de paiement et dans lesquels la carte (C) est du type pré-payée et contient une provision, la carte étant apte à débiter cette provision à chaque demande de paiement du montant de la demande ou dans lequel la carte est du type post-payé.

18. Moyens de traitement de messages et de paiement (SP) selon la revendication 17, dans lesquels la carte pré-payée (C) formant le message d'acquittement est apte à insérer, dans ce message, une preuve que le montant de la demande dû a été débité dans la carte.

19. Moyens de traitement de messages et de paiement (SP) selon la revendication 17, dans lesquels la carte pré-payée (C) est apte à constituer un fichier des demandes acquittées et des montants correspondants, le message d'acquittement n'étant émis qu'une fois la mise à jour de ce fichier effectuée.

20. Moyens de traitement de messages et de paiement (SP) selon la revendication 17, dans lesquels la carte pré-payée (C) peut être rechargée, le fichier qu'elle contient pouvant être transféré lors du rechargement.

21. Moyens de traitement de messages et de paiement (SP) selon la revendication 17, dans lesquels la carte pré-payée (C) est du type porte-monnaie électronique.

## Patentansprüche

1. Zahlungssystem für die Nutzung einer auf einem Träger enthaltenen Software (L), wobei diese Software eine Schnittstelle (IL) enthält und das System die Software-Schnittstelle umfasst und außerdem ein Zahlungsmodul (W) sowie Nachrichten- und Zahlungsverarbeitungsmittel (SP) umfasst, wobei die Funktionen dieser Mittel die folgenden sind:
die Software-Schnittstelle (IL) kann eine erste Nachricht (1) bilden, die eine Nachricht über ein Angebot zur Nutzung der Software ist, wobei diese erste Nachricht (1) mindestens die Identität des Herausgebers der Software (E), Angebotsparameter, sowie die digitale Signatur durch den Herausgeber mindestens eines Teils des Angebots enthält, wobei diese erste Nachricht an das Zahlungsmodul (W) gerichtet ist,
das Zahlungsmodul (W) kann diese erste Nachricht (1) empfangen, sie anzeigen (1a) als Rückantwort die eventuelle Akzeptierung (1b) des Nutzers (U) der Software empfangen, und im Fall des Akzeptierens eine zweite Nachricht (2) der Zahlungsaufforderung bilden, welche mindestens die Identität des Nutzers (U) und die des Herausgebers (E) sowie einen Nachweis, dass der Nutzer (U) das Angebot akzeptiert, enthält, wobei dieses Modul (W) diese zweite Nachricht (2) an die Nachrichtenverarbeitungs- und Zahlungsmittel (SP) senden kann,
die Nachrichtenverarbeitungs- und Zahlungsmittel (SP) können die zweite Nachricht (2) empfangen, den Nachweis, den sie enthält, überprüfen, die Zahlungsaufforderung mit mindestens der Identität des Nutzers (U) und der Identität des Herausgebers der Software (E) dem zu zahlenden und dem Herausgeber (E) gutzuschreibenden Betrag aufzeichnen, wobei diese Mittel außerdem eine dritte Nachricht (3) bilden können, die eine Bestätigungsnachricht ist, wobei diese dritte Nachricht (3) mindestens die Identität der Verarbeitungsmittel und eine digitale Signatur umfasst, welche den Zahlungsnachweis darstellt, und wobei diese dritte Nachricht an das Zahlungsmodul (W) gerichtet ist,
das Zahlungsmodul (W) kann außerdem diese dritte Nachricht (3) an die Software-Schnittstelle (IL) rückübertragen,
die Software-Schnittstelle (IL) kann außerdem die Signatur der Verarbeitungsmittel (SP) hinsichtlich der Parameter des in der ersten Nachricht enthaltenen Angebots überprüfen und im Fall der Übereinstimmung die Nutzung der Software (L) zulassen.

2. System nach Anspruch 1, wobei die digitale Signatur durch den Herausgeber mindestens eines Teils des Angebots und die den Zahlungsnachweis darstellende digitale Signatur Signaturen mit öffentlichem Schlüssel mit einem Zertifizierungsbaum (arbre de certification) sind, wobei eine Autorität (A) eine Wurzel des Zertifizierungsbaums definiert, in der sich die verschiedenen Teilnehmer des Systems befinden, nämlich die Software-Herausgeber (E) und die Zahlungs-Server (SP), wobei ein Zertifikat oder Zertifikate der ersten und dritten Nachricht (1) und (3) für die Überprüfung der Signaturen hinzugefügt wird/werden.

3. System nach Anspruch 1, wobei die Nachrichtenverarbeitungs- und Zahlungsmittel von einem entfernten Zahlungs-Server (SP) gebildet sind, der mit dem Zahlungsmodul (W) über ein Telekommunikationsnetz verbunden ist, wobei dieser Server (SP) die zweite Nachricht (2) empfängt und verarbeitet und die dritte Nachricht (3) bildet und sendet, und wobei dieser Zahlungs-Server die Summe der von jedem Nutzer für alle Herausgeber getätigten Ausgaben berechnet, um diesen Nutzer zahlen zu lassen, und die Begleichung der von allen Nutzern jedem Herausgeber geschuldeten Summen in die Wege leitet.

4. System nach Anspruch 1, wobei die Nachrichtenverarbeitungs- und Zahlungsmittel abgesicherte Mittel (LC, C) umfassen, die mindestens die Identität des Nutzers (U) enthalten, wobei diese Mittel die zweite Nachricht (2) empfangen, den darin enthaltenen Nachweis kontrollieren, die Zahlungsaufforderung aufzeichnen und die dritte Bestätigungs-Nachricht (3) mit dem Zahlungsnachweis bilden können, und die außerdem einen entfernten Zahlungsserver (SP) umfassen, welcher dem Herausgeber (E) eine Gutschrift zukommen lassen kann.

5. System nach Anspruch 4, wobei die abgesicherten Mittel einen Kartenleser (LC) mit einer die Identität des Nutzers enthaltenen Karte (C) umfassen, wobei der Kartenleser und die Karte die zweite Nachricht (2) empfangen, den darin enthaltenen Nachweis kontrollieren, die Zahlungsaufforderung aufzeichnen und die dritte Bestätigungsnachricht (3) mit dem Zahlungsnachweis bilden können.

6. System nach Anspruch 5, wobei die Karte (C) vom Vorbezahltyp ist und eine Deckung bzw. ein Guthaben enthält, wobei die Karte dieses Guthaben bei jeder Zahlungsaufforderung mit dem Betrag der Zahlungsaufforderung belasten kann.

7. System nach Anspruch 6, wobei die Vorbezahlkarte (C), welche die Bestätigungs-Nachricht bildet, in diese Nachricht einen Nachweis einfügen kann, dass die Karte mit dem Betrag der angeforderten Schulden belastet worden ist.

8. System nach Anspruch 6, wobei die Vorbezahlkarte (C) eine Datei der beglichenen Zahlungsaufforderungen und der entsprechenden Beträge bilden kann, wobei die Bestätigungs-Nachricht mit ihrer Signatur nur dann gesendet wird, wenn die Aktualisierung dieser Datei durchgeführt wurde.

9. System nach Anspruch 8, wobei die Vorbezahlkarte (C) aufgeladen werden kann und die Datei, die sie enthält, vorher dem Zahlungsserver (SP) bei der Wiederaufladung für eine Überweisung an die Herausgeber übermittelt wird.

10. System nach Anspruch 6, wobei die Vorbezahlkarte (C) vom Typ der elektronischen Geldbörse ist.

11. System nach Anspruch 4, wobei die Karte (C) vom Nachbezahltyp ist.

12. System nach Anspruch 5, wobei die Karte (C) vom Nachbezahltyp ist.

13. System nach Anspruch 12, wobei die Nachbezahlkarte (C) eine Datei der beglichenen Zahlungsaufforderungen und der entsprechenden Beträge bilden kann, wobei die Bestätigungs-Nachricht mit ihrer Signatur nur dann gesendet wird, wenn diese Datei aktualisiert worden ist.

14. System nach Anspruch 13, wobei die Datei der Karte an den Zahlungsserver (SP) für eine Überweisung an die Herausgeber übermittelt wird.

15. Zahlungsmodul (W) für ein Zahlungssystem für die Nutzung von Software, **dadurch gekennzeichnet, dass** es umfasst:
• Mittel zur Verarbeitung einer ersten Nachricht (1), die mindestens die Identität eines Software-Herausgebers (E), Parameter eines Nutzungsangebots und eine digitale Signatur mindestens eines Teils dieses Angebots enthält,
• Mittel zum Senden dieser Nachricht (1a) an einen Nutzer (U),
• Mittel zum Empfangen einer Akzeptierung (1b) des Nutzers (U) der Software,
• Mittel zum Bilden einer zweiten Nachricht (2) zur Zahlungsaufforderung, die mindestens die Identität des Nutzers (U) und die des Herausgebers (E) sowie einen Nachweis, dass der Nutzer (U) das Angebot akzeptiert, enthält,
• Mittel zum Empfangen und Rückübertragen einer dritten Nachricht (3), die eine einen Zahlungsnachweis darstellende digitale Signatur umfasst.

16. Nachrichtenverarbeitungs- und Zahlungsmittel (SP) für ein Zahlungssystem für die Nutzung von Software, **dadurch gekennzeichnet, dass** es umfasst:
• Mittel, welche von einem Zahlungsmodul (W) eine Zahlungsaufforderungsnachricht empfangen können, die mindestens die Identität eines Nutzers (U) und die eines Herausgebers (E) sowie einen Nachweis, dass der Nutzer (U) das ihm gemachte Angebot zur Nutzung von Software akzeptiert, enthält,
• Mittel, welche diesen Nachweis kontrollieren können,
• Mittel, welche die Zahlungsaufforderung mit mindestens der Identität des Nutzers und der Identität des Herausgebers der Software sowie dem zu zahlenden Betrag aufzeichnen können, und Mittel, welche dem Herausgeber (E) den Betrag gutschreiben können,
• Mittel, welche außerdem eine Bestätigungs-Nachricht (3) bilden können, wobei diese Nachricht (3) mindestens die Identität der Verarbeitungsmittel sowie eine digitale Signatur, die einen Zahlungsnachweis bildet, umfasst,
• Mittel zum Senden dieser Nachricht (3) an ein Zahlungsmodul (W).

17. Nachrichtenverarbeitungs- und Zahlungsmittel (SP) für ein Zahlungssystem für die Nutzung von Software nach Anspruch 15, **dadurch gekennzeichnet, dass** sie abgesicherte Mittel aufweisen, die einen Kartenleser (LC) mit einer die Identität eines Nutzers von Software enthaltenden Karte (C) umfassen, wobei der Kartenleser und die Karte eine Nachricht empfangen können, welche einen Nachweis enthält, dass der Nutzer ein Angebot akzeptiert hat, diesen Nachweis kontrollieren und eine Zahlungsaufforderung aufzeichnen sowie eine Bestätigungs-Nachricht (3) mit dem Zahlungsnachweis bilden können, und wobei die Karte (C) vom Vorbezahltyp ist und ein Guthaben enthält, wobei die Karte dieses Guthaben bei jeder Zahlungsaufforderung mit dem Betrag der Zahlungsaufforderung belasten kann, oder wobei die Karte vom Nachbezahltyp ist.

18. Nachrichtenverarbeitungs- und Zahlungsmittel (SP) nach Anspruch 17, wobei die Vorbezahlkarte (C), welche die Bestätigungs-Nachricht bildet, in diese Nachricht einen Nachweis einfügen kann, dass die Karte mit dem Betrag der fälligen Zahlungsaufforderung belastet worden ist.

19. Nachrichtenverarbeitungs- und Zahlungsmittel (SP) nach Anspruch 17, wobei die Vorbezahlkarte (C) eine Datei der beglichenen Zahlungsaufforderungen und der entsprechenden Beträge bilden kann, wobei die Bestätigungs-Nachricht nur dann gesendet wird, wenn diese Datei aktualisiert worden ist.

20. Nachrichtenverarbeitungs- und Zahlungsmittel (SP) nach Anspruch 17, wobei die Vorbezahlkarte (C) wieder aufgeladen werden kann und die Datei, die sie enthält, bei der Wiederaufladung übermittelt werden kann.

21. Nachrichtenverarbeitungs- und Zahlungsmittel (SP) nach Anspruch 17, wobei die Vorbezahlkarte (C) vom Typ einer elektronischen Geldbörse ist.

## Claims

1. A payment system for use of a software program (L) stored on a medium, whereby said software contains an interface (IL) and said system is made up of a payment module (W) together with the means of message and payment processing (SP), and wherein the functions of these means are as follows:
the software interface (IL) is able to compose a first message (1) offering use of the software; said first message (1) at least contains the identity of the software editor (E), offer parameters and the editor's digital signature for at least part of the software offered, and is sent to the payment module (W) ;
the payment module (W) is able to receive said first message (1), display it (1a), receive the acceptance (1b) of the software user (U) should he/she so accept, and, if so, compose a second message (2) requesting payment, at least containing the identity of the user (U) and of the software editor (E) together with proof that the user (U) accepts the offer; said module (W) is also able to send said second message (2) to the means of message and payment processing (SP);
the means of message and payment processing (SP) are able to receive the second message (2), check the proof it contains, record the payment request with at least the identity of the user (U) and of the software editor (E) and the amount to be paid, and credit the editor (E) with said amount; said means are also able to compose a third message (3), which is a payment settlement message, said third message (3) at least contains the identity of the means of processing and a digital signature constituting proof of payment, and is addressed to the payment module (W);
the payment module (W) is additionally able to resend said third message (3) to the software interface (IL);
the software interface (IL) is additionally able to check the means of processing's signature against the offer parameters contained in the first message and, if they agree, authorize use of the software program (L).

2. A system in accordance with claim 1, wherein the digital signature by the editor of at least part of the offer and the digital signature constituting proof of payment are both public key signatures with certification trees, whereby an authority (A) defines the root of the certification tree containing the system's different participants, notably the software editors (E) and payment servers (SP), and whereby one or more certificates are attached to the first and third messages (1) (3) for signature checking.

3. A system in accordance with claim 1, wherein the means of message and payment processing are made up of a remote payment server (SP) linked to the payment module (W) by a telecommunications network, and whereby said server (SP) receives and processes the second message (2) and composes and sends the third message (3); said payment server calculates the total consumption of each user for all of the software editors in order to impose payment by said user and causes the sums owing to each software editor to be transferred by all of the users.

4. A system in accordance with claim 1, wherein the means of message and payment processing includes secure means (LC, C) containing at least the identity of the user (U); said means are additionally able to receive the second message (2), check the proof it contains, record the payment request and compose the third, payment settlement, message (3), and also include a remote payment server (SP) able to credit the software editor (E).

5. A system in accordance with claim 4, wherein the secure means include a smart card reader (LC) with a smart card (C) containing the user's identity, and whereby said reader and card are able to receive the second message (2), check the proof it contains, record the payment request and compose the third, payment settlement, message (3) with the proof of payment.

6. A system in accordance with claim 5, wherein the card (C) is of the prepay type and contains a balance and whereby the card is able to debit said balance with the request amount at each payment request.

7. A system in accordance with claim 6, wherein the prepay card (C) forming the payment settlement message is able to insert into said message proof that the requested amount has been debited from the card.

8. A system in accordance with claim 6, wherein the prepay card (C) is able to build up a file containing the settled requests and corresponding amounts, and whereby the payment settlement message is only sent with its digital signature once this file has been updated.

9. A system in accordance with claim 8, wherein the prepay card (C) can be topped up, and whereby the file it contains is first transferred to the payment server (SP) during the topping-up process, for transferring funds to the software editors.

10. A system in accordance with claim 6, wherein the prepay card (C) is of the "electronic wallet" type.

11. A system in accordance with claim 4, wherein the card (C) is of the post-pay type.

12. A system in accordance with claim 5, wherein the card (C) is of the post-pay type.

13. A system in accordance with claim 12, wherein the post-pay card (C) is able to build up a file containing the settled requests and corresponding amounts, and whereby the payment settlement message is only sent with its digital signature once this file has been updated.

14. A system in accordance with claim 13, wherein the card's file is transferred to the payment server (SP) for transferring funds to the software editors.

15. A payment module (W) for a payment system for software program use, **characterized in that** it comprises:
· the means of processing a first message (1), notably containing the identity of a software editor (E), software use offer parameters and a digital signature for at least part of said software use offer;
· the means of sending this message (1a) to a user (U);
· the means of receiving an acceptance (1b) from said software program user (U);
· the means of composing a second message (2) requesting payment, notably containing the identity of the user (U) and of the software editor (E) together with proof that the user (U) accepts the offer;
· the means of receiving and processing a third message (3) containing a digital signature constituting proof of payment.

16. A means of message and payment processing (SP) for a payment system for software program use, **characterized in that** it comprises:
· the means of receiving a payment request message from a payment module (W), in which said message notably contains the identity of a user (U) and of a software editor (E) together with proof that the user (U) accepts the software use offer made to him/her;
• the means of checking that proof;
• the means of recording the payment request with at least the identity of the user (U) and of the software editor (E), the amount to be paid and the means of crediting the software editor (E) with said amount;
· the means of also composing a payment settlement message (3), notably containing the identity of the means of processing and a digital signature constituting proof of payment;
· the means of sending said message (3) to a payment module (W).

17. A means of message and payment processing (SP) for a payment system for software use according to claim 15, **characterized in that** they comprise secure means comprising a smart card reader (LC) with a smart card (C) containing the identity of a software user, whereby the card reader and card are able to receive a message containing proof that the user has accepted a software use offer, check said proof, record a payment request and compose a payment settlement message (3) containing proof of payment and in which the card (C) is of the pre-pay type and contains a balance, the card being able to debit said balance for each payment request from the sum of the request, or in which the card is of the post-pay type.

18. A means of message and payment processing (SP) in accordance with claim 17, wherein the prepay card (C) forming the payment settlement message is able to insert into said message proof that the requested amount has been debited from the card.

19. A means of message and payment processing (SP) in accordance with claim 17, wherein the prepay card (C) is able to build up a file containing the settled requests together with the corresponding amounts, and whereby the payment settlement message is only sent once this file has been updated.

20. A means of message and payment processing (SP) in accordance with claim 17, wherein the prepay card (C) can be topped up, and whereby the file it contains can be transferred during the topping-up process.

21. A means of message and payment processing (SP) in accordance with claim 17, wherein the prepay card (C) is of the "electronic wallet" type.
